# EUROPÄISCHE PATENTSCHRIFT

(11) **EP 1 461 536 B1**
(45) Veröffentlichungstag und Bekanntmachung des Hinweises auf die Patenterteilung: **14.09.2005**
(21) Anmeldenummer: 02796634.0
(22) Anmeldetag: 14.12.2002
(51) Int. Cl.: F16B 21/02

(54) **BEFESTIGUNGSELEMENT ZUM EINSETZEN IN EIN LANGLOCH EINER TRÄGERPLATTE**
FIXING ELEMENT FOR INSERTING INTO A LONGITUDINAL CAVITY OF A CARRIER PLATE
ELEMENT DE FIXATION DESTINE A ETRE INSERE DANS UN TROU OBLONG D'UNE PLAQUE SUPPORT

(30) Priorität: 29.12.2001 DE 10164441
(43) Veröffentlichungstag der Anmeldung: 29.09.2004
(73) Patentinhaber: A. Raymond & Cie, 38028 Grenoble (FR)
(72) Erfinder: GOMBERT, Stéphane, F-38640 Claix (FR)
(74) Vertreter: Rüttgers, Joachim
(86) Internationale Anmeldenummer: PCT/EP2002/014271
(87) Internationale Veröffentlichungsnummer: WO 2003/060336

(56) Entgegenhaltungen:
- US-A- 4 375 879
- US-A- 4 705 442
- US-A- 4 981 405

## Beschreibung

Die Erfindung bezieht sich auf Befestigungselemente aus Kunststoff mit einem Fußteil zum Einsetzen in ein Langloch einer Trägerplatte, wobei das Fußteil aus einem dem Langlochrand entsprechenden Kopf und einem der Breite des Langlochs angepassten Schaft besteht und das Befestigungselement nach dem Einsetzen des Kopfes durch eine Vierteldrehung unter elastischer Verformung des Schaftes im Langloch verriegelbar ist, wobei der Schaft aus einem den Kopf mit dem Befestigungselement verbindenden Mittelsteg von der Breite des Langloches besteht, an dessen beiden Kanten jeweils ein Schenkel im rechten Winkel und in entgegengesetzter Richtung derart angeformt ist, dass diese beim Eindrehen des Schaftes durch den Langlochrand elastisch zum Mitteisteg hingebogen werden und nach der Vierteldrehung infolge der elastischen Rückstellkraft des Kunststoffs sich wieder in ihre ursprüngliche Lage aufrichten und sich damit einer Drehung in entgegengesetzter Richtung widersetzen.

Derartige Befestigungselemente sind aus der US-A-4,981,405 bekannt Durch das Ausbilden der Befestigungselemente mit zwei an einem Schaft im rechten Winkel und in entgegengesetzter Richtung angeformten Schenkeln wird einer Drehung der Befestigungselemente entgegen der Eindrehrichtung ein gewisser Widerstand entgegengesetzt, der in vorteilhafter Weise das Risiko eines unbeabsichtigten Lösens der Befestigungselemente verringert.

Weitere Befestigungselemente mit angeformten Schenkeln sind aus der US-A-4,375,879 und der US-A-4,705,442 bekannt.

Aus DE 1 181 007 ist ein als Schraube und Mutter ausgebildetes Befestigungselement dieser Art bekannt, bei dem der in das Langloch einsetzbare Schaft der Mutter eine der Breite des Langlochs entsprechende Breite sowie parallel zur Schraubenachse verlaufende Anschlagflächen hat, die mit entsprechenden Flächen im Langloch zusammenwirken, so daß eine Drehung der Mutter beim Festziehen der Schraube verhindert wird. Diese Mutter läßt sich nach dem Lösen der Schraube leicht wieder zurückdrehen und dann durch das Langloch herausziehen.

Es gibt femer Befestigungselemente mit einem der Mutter vergleichbaren Fußteil der oben genannten Art, welches mit einem ähnlich ausgebildeten Schaft versehen ist. Da dieses Fußteil jedoch nicht verschraubt wird, besteht die Gefahr, daß sich das Befestigungselement durch eine ungewollte Drehbewegung wieder lösen kann.

Der Erfindung liegt die Aufgabe zugrunde, Befestigungselemente der eingangs genannten Art anzugeben, die sich durch einen besonders festen Sitz auszeichnen.

Diese Aufgabe wird bei einem Befestigungselement der eingangs genannten Art erfindungsgemäß zum einen dadurch gelöst, dass der Kopf an seinen beiden äußeren Enden Andrückrampen aufweist, die sich beim Eindrehen über den Langlochrand erstrecken, und dass an den freien Enden der Schenkel weitere Schenkel angeformt sind.

Diese Aufgabe wird bei einem Befestigungselement der eingangs genannten Art erfindungsgemäß zum anderen dadurch gelöst, der Kopf an seinen beiden äußeren Enden Andrückrampen aufweist, die sich beim Eindrehen über den Langlochrand erstrecken, und dass an den beiden Kanten des Mittelsteges je ein Gegenschenkel in entgegengesetzter Richtung angeformt ist.

Durch das Vorsehen der Andrückrampen sowie der weiteren Schenkel beziehungsweise der Gegenschenkel ergibt sich ein besonders fester Sitz, da durch die Andrückrampen das Befestigungselement nach Drehung in Eindrehrichtung fest mit einer Trägerplatte verbunden ist und durch die weiteren Schenkel beziehungsweise die Gegenschenkel einer unerwünschten Drehung der erfindungsgemäßen Befestigungselemente entgegen der Eindrehrichtung ein besonders großer Widerstand entgegengesetzt wird.

In den Unteransprüchen sind weitere zweckmäßige Ausgestaltungen von erfindungsgemäßen Befestigungselementen angegeben. Zwei spezielle Ausführungsbeispiele von erfindungsgemäßen Befestigungselementen sind nachfolgend mit Bezug auf die Figuren der Zeichnung näher erläutert. Es zeigen:
- Fig. 1: ein Befestigungselement mit Fußteil in einer Seitenansicht zum Verankern in einem Langloch,
- Fig. 2: einen Schnitt durch den Schaft mit Blick auf den im Langloch eingesetzten Kopf,
- Fig. 3: den gleichen Schnitt durch den Schaft während der Drehung,
- Fig. 4: den gleichen Schnitt durch den Schaft nach beendeter Vierteldrehung,
- Fig. 5: ein weiteres Befestigungselement mit einer anderen Schaftausbildung zur Verbindung zweier Platten im Schnitt,
- Fig. 6: das gleiche Befestigungselement in Seitenansicht,
- Fig. 7: einen Schnitt durch den Schaft mit Blick auf den im Langloch eingesetzten Kopf.
- Fig. 8: den gleichen Schnitt durch den Schaft während der Drehung und
- Fig. 9: den gleichen Schnitt durch den Schaft nach beendeter Vierteldrehung.

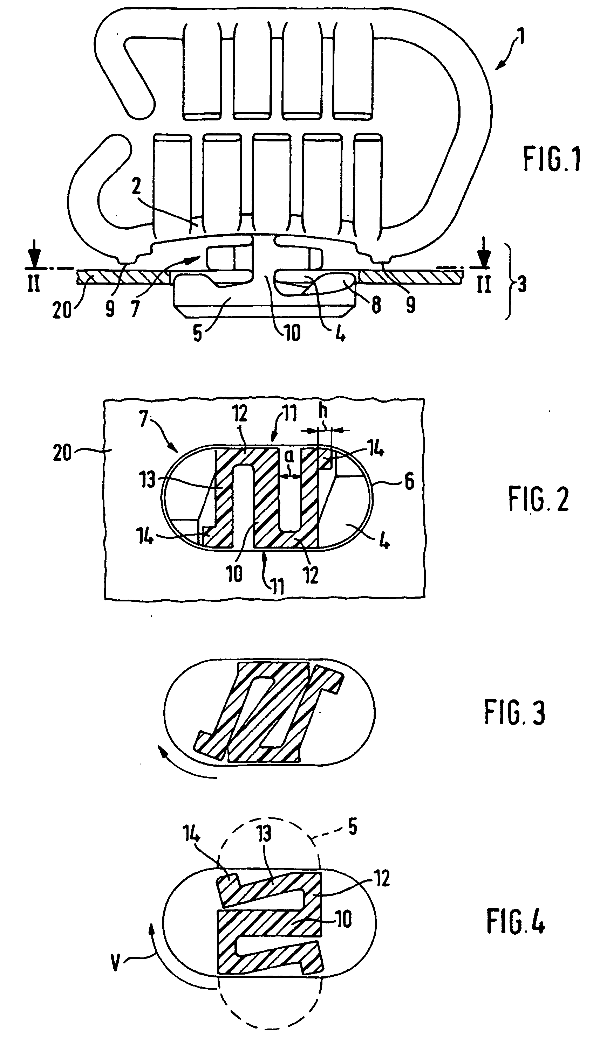

Das in Fig. 1 bis 4 dargestellte Befestigungselement besteht aus einem Oberteil 1 zur klemmenden Halterung von langgestreckten Bauteilen wie beispielsweise Kabelbündel und einem an dessen Bodenplatte 2 einstückig angeformten Fußteil 3, welches zum Einsetzen in ein Langloch 4 einer Trägerplatte ausgebildet ist. Das Fußteil 3 wiederum umfaßt einen Kopf 5, welcher in seiner äußeren Kontur dem Langlochrand 6 angepaßt ist, und einem Schaft 7, welcher die gleiche Breite hat wie das Langloch.

Der Kopf 5 läßt sich nach dem Einsetzen in das Langloch 4 durch eine Vierteldrehung unter elastischer Verförmung des Schaftes 7 verriegeln.

Der Kopf 5 weist hierzu an seinen beiden äußeren Enden Andrückrampen 8 auf, welche sich beim Eindrehen über den Langlochrand 6 auf die Rückseite der Trägerplatte schieben. Die Bodenplatte 2 ist zu diesem Zweck leicht gewölbt und federt beim Andrücken der untersten Auflagerippen 9 soweit hoch, daß sich die Andrückrampen 8 unter die Trägerplatte schieben können.

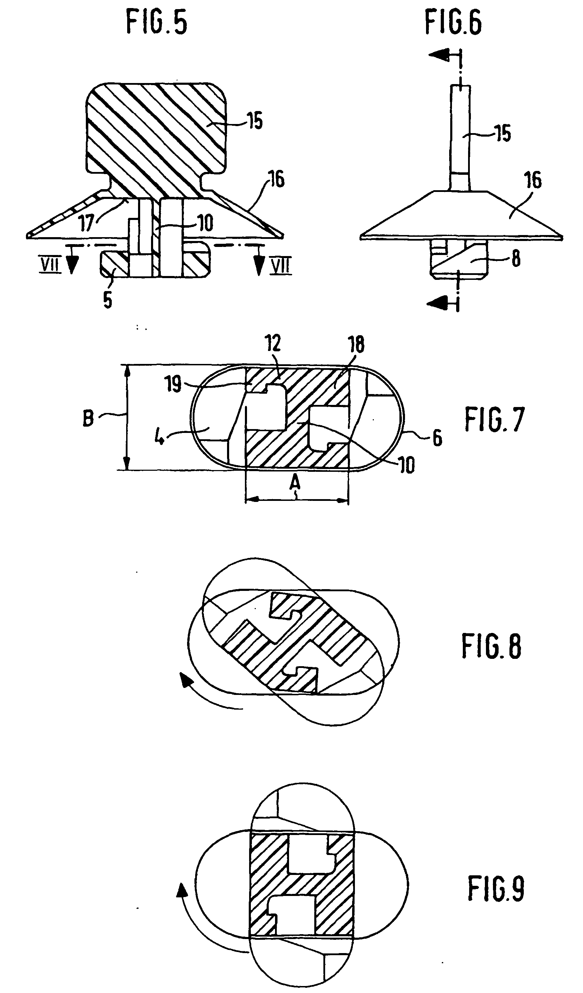

Der Schaft 7 besteht erfindungsgemäß aus einem Mittelsteg 10, weicher den Kopf 5 mit der Bodenplatte 2 verbindet. An den beiden Kanten 11 ist jeweils ein Schenkel 12 im rechten Winkel und in entgegengesetzter Richtung angeformt, und zwar derart, daß diese beim Eindrehen des Schaftes 7 durch den Langlochrand 6 elastisch zum Mittelsteg 10 hingebogen werden (vgl. Fig. 3 und 8) und nach der Vierteldrehung infolge der elastischen Rückstellkraft des Kunststoffs sich wieder in ihre ursprüngliche Lage aufrichten (vgl. Fig. 4 und 9). Will man den Schaft 7 in die entgegengesetzte Richtung drehen, so ist das unmöglich ohne Beschädigung des Schaftes 7, da die Schenkel 12 sich nicht zusammendrücken lassen und auch sonst nicht ausweichen können.

Bei dem Ausführungsbeispiel nach den Fig. 1 bis 4 sind außerdem an den freien Enden der elastisch verformbaren Schenkel 12 parallel zum Mittelsteg 10 zwei weitere Schenkel 13 von der Länge des Mittelsteges 10 angeformt Diese weisen an ihren freien Enden nochmals in entgegengesetzter Richtung wegstrebende Ansätze 14 auf, deren Länge gleich dem Abstand zwischen dem Mittelsteg 10 und den parallel dazu verlaufenden Schenkeln 13 ist. Dadurch wird sichergestellt, daß die Schenkel 12 nach der Vierteldrehung V zwischen Mittelsteg 10 und dem Rand 6 des Langlochs 4 eingeklemmt sind und der elastisch verformbare Schenkel 12 nicht seitlich ausweichen kann.

Bei dem Ausführungsbeispiel nach Fig. 5 und 6 ist ein Befestigungselement zur Verbindung zweier Platten dargestellt mit einem Drehgriff 15 und einem federnd nachgebenden Auflageschirm 16, an dessen Bodenplatte 17 eine andere Schaftvariante angeformt ist.

Bei diesem Schaft ist an den freien Kanten 11 des Mittelsteges 10 je ein GegenSchenkel 18 in entgegengesetzter Richtung angeformt, wobei der Abstand "A" der beiden Schenkel 12 und Gegenschenkel 18 jeweils der Breite "B" des Langloches 4 entspricht und der Gegenschenkel 18 etwa doppelt so dick ist wie der elastisch verformbare Schenkel 12. Um die stützende Auflage des elastischen Schenkels 12 zu verstärken, ist an dessen freiem Ende - genau wie beim Schenkel 13 in Figur 2 - ebenfalls ein Ansatz 19 rechtwinklig angeformt.

## Patentansprüche

1. Befestigungselement aus Kunststoff mit einem Fußteil (3) zum Einsetzen in ein Langloch (4) einer Trägerplatte, wobei das Fußteil (4) aus einem dem Langlochrand (6) entsprechenden Kopf (5) und einem der Breite des Langlochs (4) angepassten Schaft (7) besteht und das Befestigungselement nach dem Einsetzen des Kopfes (5) durch eine Vierteldrehung unter elastischer Verformung des Schaftes (7) im Langloch (4) verriegelbar ist, wobei der Schaft (7) aus einem den Kopf (5) mit dem Befestigungselement verbindenden Mittelsteg (10) von der Breite des Langloches (4) besteht, an dessen beiden Kanten (11) jeweils ein Schenkel (12) im rechten Winkel und in entgegengesetzter Richtung derart angeformt ist, dass diese beim Eindrehen des Schaftes (7) durch den Langlochrand (6) elastisch zum Mittelsteg (10) hingebogen werden und nach der Vierteldrehung infolge der elastischen Rückstellkraft des Kunststoffs sich wieder in ihre ursprüngliche Lage aufrichten und sich damit einer Drehung in entgegengesetzter Richtung widersetzen, **dadurch gekennzeichnet, dass** der Kopf (5) an seinen beiden äußeren Enden Andrückrampen (8) aufweist, die sich beim Eindrehen über den Langlochrand (6) erstrecken, und dass an den freien Enden der Schenkel (12) weitere Schenkel (13) angeformt sind.

2. Befestigungselement nach Anspruch 1, **dadurch gekennzeichnet, dass** die weiteren Schenkel (13) parallel zum Mittelsteg (10) ausgerichtet und von der Länge des Mittelsteges (10) sind.

3. Befestigungselement nach Anspruch 2, **dadurch gekennzeichnet, dass** an den freien Enden der weiteren Schenkel (13) nochmals in entgegengesetzter Richtung voneinander wegstrebende Ansätze (14) vorhanden sind, deren überstehende Höhe (h) gleich dem Abstand (a) zwischen dem Mittelsteg (10) und den parallel dazu verlaufenden weiteren Schenkeln (13) ist.

4. Befestigungselement aus Kunststoff mit einem Fußteil (3) zum Einsetzen in ein Langloch (4) einer Trägerplatte, wobei das Fußteil (4) aus einem dem Langlochrand (6) entsprechenden Kopf (5) und einem der Breite des Langlochs (4) angepassten Schaft (7) besteht und das Befestigungselement nach dem Einsetzen des Kopfes (5) durch eine Vierteldrehung unter elastischer Verformung des Schaftes (7) im Langloch (4) verriegelbar ist, wobei der Schaft (7) aus einem den Kopf (5) mit dem Befestigungselement verbindenden Mittelsteg (10) von der Breite des Langloches (4) besteht, an dessen beiden Kanten (11) jeweils ein Schenkel (12) im rechten Winkel und in entgegengesetzter Richtung derart angeformt ist, dass diese beim Eindrehen des Schaftes (7) durch den Langlochrand (6) elastisch zum Mittelsteg (10) hingebogen werden und nach der Vierteldrehung infolge der elastischen Rückstellkraft des Kunststoffs sich wieder in ihre ursprüngliche Lage aufrichten und sich damit einer Drehung in entgegengesetzter Richtung widersetzen, **dadurch gekennzeichnet, dass** der Kopf (5) an seinen beiden äußeren Enden Andrückrampen (8) aufweist, die sich beim Eindrehen über den Langlochrand (6) erstrecken, und dass an den beiden Kanten (11) des Mittelsteges (10) je ein Gegenschenkel (18) in entgegengesetzter Richtung angeformt ist.

5. Befestigungselement nach Anspruch 4, **dadurch gekennzeichnet, dass** der Abstand (A) der beiden rechtwinklig abstehenden Schenkel (12) und Gegenschenkel (18) jeweils der Breite (B) des Langloches (4) entspricht und jeder Gegenschenkel (18) etwa doppelt so dick wie der zugehörige elastisch verformbare Schenkel (12) ist.

## Claims

1. Fixing element made of plastics having a foot member (3) for inserting into a slot (4) in a support plate, whereby the foot member (3) comprises a head (5) corresponding to the slot edge (6) and a shaft (7) matched to the width of the slot (4) and the fixing element is lockable after insertion of the head (5), by a quarter turn causing elastic deformation of the shaft (7) in the slot (4), whereby the shaft (7) comprises a central web (10) of the same width as the slot (4) linking the head (5) to the fixing element, on each edge (11) of said shaft a limb (12) is formed at a right angle and in opposing directions such that, on twisting in the shaft (7), they are bent elastically by the hole edge (6) towards the central web (10) and after the quarter turn, due to the elastic restoring force of the plastics, they straighten themselves into their original position and thereby resist rotation in the opposing direction, **characterised in that** the head (5) has pressure ramps (8) on both its outer ends, which on twisting in, extend over the hole edge (6) and that on the free ends of the limbs (12), further limbs (13) are formed.

2. Fixing element according to claim 1, **characterised in that** the further limbs (13) are oriented parallel to the central web (10) and have the length of the central web (10).

3. Fixing element according to claim 2, **characterised in that** shoulders (14) are present on the free ends of the further limbs (13), again facing away from each other in opposing directions and whose projecting height (h) is equal to the distance (a) between the central web (10) and the further limbs (13) running parallel to it.

4. Fixing element made of plastics having a foot member (3) for inserting into a slot (4) in a support plate, whereby the foot member (3) comprises a head (5) corresponding to the slot edge (6) and a shaft (7) matched to the width of the slot (4) and the fixing element is lockable after insertion of the head (5), by a quarter turn causing elastic deformation of the shaft (7) in the slot (4), whereby the shaft (7) comprises a central web (10) of the same width as the slot (4) linking the head (5) to the fixing element, on each edge (11) of said shaft a limb (12) is formed at a right angle and in opposing directions such that, on twisting in the shaft (7), they are bent elastically by the hole edge (6) towards the central web (10) and after the quarter turn, due to the elastic restoring force of the plastics, they straighten themselves into their original position and thereby resist rotation in the opposing direction, **characterised in that** the head (5) has pressure ramps (8) on both its outer ends which, on twisting in, extend over the hole edge (6) and that on each edge (11) of the central web (10), a counter-limb (18) is formed in the opposing direction.

5. Fixing element according to claim 4, **characterised in that** the separation (A) of the two limbs (12) and counter-limbs (18) projecting at right angles corresponds in each case to the width (B) of the slot (4) and each counter-limb (18) is approximately twice the thickness of the associated elastically deformable limb (12).

## Revendications

1. Organe de fixation en matière plastique muni d'un élément formant pied (3) destiné à être ancré dans un trou oblong (4) ménagé dans une plaque faisant office de support, l'élément formant pied (4) se composant en l'occurrence d'une tête (5) correspondant au bord (6) du trou oblong et d'une tige (7) adaptée à la largeur du trou oblong (4) et l'organe de fixation étant destiné à être verrouillé en position dans le trou oblong (4), après l'emmanchement de sa tête (5), par une rotation d'un quart de tour par déformation élastique de la tige (7), la tige (7) se composant en l'occurrence d'une barrette entretoise centrale (10), de la largeur du trou oblong (4), raccordant la tête (5) à l'organe de fixation, au niveau des deux arêtes (11) de laquelle une patte (12) est respectivement réalisée solidaire par moulage, selon une disposition en angle droit et dans le sens opposé, dans des conditions telles que celles-ci, lorsqu'on imprime un mouvement de rotation de vissage à la tige (7), sont cintrées par le bord (6) du trou oblong, par cédage élastique, en direction de la barrette entretoise centrale (10) et, une fois la rotation dans la proportion d'un quart de tour terminée, viennent reprendre leur position initiale sous l'effet du retour élastique de la matière plastique et s'opposent ainsi donc à toute possibilité de rotation dans le sens opposé, **caractérisé en ce que** la tête (5) comporte, au niveau de ses deux extrémités extérieures, des rebords de mise en compression (8) qui, lors de la rotation de vissage, s'étendent au-dessus du bord (6) du trou oblong et **en ce que** d'autres pattes (13) sont réalisées solidaires par moulage des extrémités libres de la patte (12).

2. Organe de fixation selon la revendication 1, **caractérisé en ce que** les autres pattes (13) sont orientées parallèlement à la barrette entretoise centrale (10) et ont la même longueur que la barrette entretoise centrale (10).

3. Organe de fixation selon la revendication 2, **caractérisé en ce qu'**il est encore prévu au niveau des extrémités libres des autres pattes (13) des portions en saillie (14) qui s'écartent l'une de l'autre selon une orientation opposée, dont la hauteur de dépassement (h) est égale à l'intervalle d'écartement (a) entre la barrette entretoise centrale (10) et les autres pattes (13) disposées parallèlement à celle-ci.

4. Organe de fixation en matière plastique muni d'un élément formant pied (3) destiné à être ancré dans un trou oblong (4) ménagé dans une plaque faisant office de support, l'élément formant pied (4) se composant en l'occurrence d'une tête (5) correspondant au bord (6) du trou oblong et d'une tige (7) adaptée à la largeur du trou oblong (4) et l'organe de fixation étant destiné à être verrouillé en position dans le trou oblong (4), après l'emmanchement de sa tête (5), par une rotation d'un quart de tour par déformation élastique de la tige (7), la tige (7) se composant en l'occurrence d'une barrette entretoise centrale (10), de la largeur du trou oblong (4), raccordant la tête (5) à l'organe de fixation, au niveau des deux arêtes (11) de laquelle une patte (12) est respectivement réalisée solidaire par moulage, selon une disposition en angle droit et dans le sens opposé, dans des conditions telles que celles-ci, lorsqu'on imprime un mouvement de rotation de vissage à la tige (7), sont cintrées par le bord (6) du trou oblong, par cédage élastique, en direction de la barrette entretoise centrale (10) et, une fois la rotation dans la proportion d'un quart de tour terminée, viennent reprendre leur position initiale sous l'effet du retour élastique de la matière plastique et s'opposent ainsi donc à toute possibilité de rotation dans le sens opposé, **caractérisé en ce que** la tête (5) comporte au niveau de ses deux extrémités extérieures des rebords de mise en compression (8) qui, lors du mouvement de rotation de vissage, s'étendent au-dessus du bord (6) du trou oblong et **en ce qu'**une patte antagoniste (18) est respectivement réalisée, selon une orientation opposée, solidaire par moulage des deux arêtes (11) de la barrette entretoise centrale (10).

5. Organe de fixation selon la revendication 4, **caractérisé en ce que** l'intervalle d'écartement (A) entre les deux pattes (12) en saillie selon une disposition angulaire et la patte antagoniste (18) correspond respectivement à la largeur (B) du trou oblong (4) et **en ce que** chaque patte antagoniste (18) est sensiblement deux fois plus épaisse que la patte susceptible de se déformer par cédage élastique (12) qui lui correspond.
